# EUROPEAN PATENT SPECIFICATION

(11) **EP 3 895 795 B1**
(45) Date of publication and mention of the grant of the patent: **17.04.2024**
(21) Application number: 20170265.1
(22) Date of filing: 18.04.2020
(51) Int. Cl.: B01J 19/08

(54) **A REACTOR WITH AN ELECTRICALLY HEATED STRUCTURED CERAMIC CATALYST**
REAKTOR MIT EINEM ELEKTRISCH BEHEIZTEN STRUKTURIERTEN KERAMISCHEN KATALYSATOR
RÉACTEUR COMPORTANT UN CATALYSEUR DE CÉRAMIQUE STRUCTURÉ CHAUFFÉ ÉLECTRIQUEMENT

(43) Date of publication of application: 20.10.2021
(73) Proprietor: Pauletto, Gianluca, 85354 Freising (DE)
(72) Inventor: Pauletto, Gianluca, 85354 Freising (DE)
(74) Representative: Kaya, Erdem

(56) References cited:
- WO-A1-2017/036794
- FR-A1- 2 831 154
- JP-A- H07 265 652
- US-A1- 2005 016 064
- US-A1- 2007 071 662
- US-A1- 2018 098 385
- US-A1- 2019 009 262
- Marturano M ET AL: "a-A1203 Catalyst supports for synthesis gas production: influence of different alumina bonding agents on support and catalyst properties", ELSEVIER Materials Chemistry and Physics, 1 January 1997 (1997-01-01), pages 252-256, XP093041410, Retrieved from the Internet: URL:https://www.sciencedirect.com/science/ article/pii/S0254058497800600 [retrieved on 2023-04-24]

## Description

### TECHNICAL FIELD

The invention relates to a reactor shell suitable for producing synthesis gas and/or carbon dioxide from a fed reactive mixture stream and particularly relates to a reactor shell having electrically heated structured ceramic catalyst. The invention also relates to a relevant method where the structured ceramic catalyst is electrically heated.

### BACKGROUND OF THE INVENTION

Currently stranded gas is often flared for all the cases where the amount is not enough to meet economic conditions. These releases in remote locations make uneconomical the transportation via truck or pipeline. Transformation of this natural gas into product (as methanol, diesel, gasoline, solvents and other hydrocarbons) is a necessary opportunity to decrease the CO₂ emission. All the processes, used for the production of the above mentioned liquids, involve a first step where the methane-containing gas is, after treatments, converted into synthesis gas.

On the other hand, there is an increasing necessity of hydrogen production plants that convert liquid hydrocarbons, as well as biomass based products as methanol, ethanol and biogas or other methane-containing gas. Accordingly, there is a strong demand for small and distributed plants to produce hydrogen in addition to big centralized plants as this will improve and facilitate the supply chains that would otherwise rely on big production facilities followed by hydrogen transportation as liquefied or pressurized gas. If this is achieved, the widespread availability of this fuel in the territory would not only be a benefit for the fuel cells based applications but also for all the other applications where hydrogen could be used as green fuel and/or reagent and/or raw material and/or energy carriers.

In addition to above, there is also an increasing necessity of removing any polluting substances, responsible of the tropospheric ozone levels, coming from anthropogenic industrial activities. Countries' environmental regulations is constantly becoming stricter in respect to the emissions of volatile organic components (VOC), here identified according to the European Union VOC definition. The necessity of removing VOC until concentrations, often lower than ppm (part per million), not only requires traditional oxidizing flames or temperatures higher than auto-ignition but also catalysts that operate at temperature higher than 200 °C. To reach auto-sustainable flames and/or required reaction temperatures, often additional combustible is used that finally contributes in increasing the amount of CO₂ emitted. In some application electricity is also used to reach auto-ignition temperature as reported in US 2014/0283812 A1.

During 2018, more than 70 million tonnes of H₂ were produced and used mainly in ammonia production, refining processes and methanol production. Different estimations see a rapid and steep increasing hydrogen demand that would double in the next 10 years.

Currently more than 80% of the available H₂, is produced reacting natural gas and/or light naphtha with steam through the steam reforming (SR) reaction (i). This reaction is highly endothermic and therefore more than 20% of the reacting natural gas is fired in the reformer, together with the fuel gas coming from the pressure swing adsorption (PSA), to maintain the temperature at about 900 °C. The remaining part is mostly produced via non-catalytic partial oxidation (PO) that, even if it involves an exothermic reaction (ii), requires complicated and expensive plants and temperatures higher than 1200 °C.

CH₄ + H₂O ←→ CO + 3 H₂ (i)

CH₄ + ½ O₂ ←→ CO +2 H₂ (ii)

CH₄ + CO₂ ←→ 2CO +2 H₂ (iii)

Other than SR and PO a common technology to produce synthesis gas is auto thermal reforming (ATR) that requires big and expensive gas pre-heating ovens and where however only highly desulphurized reagents can be used. The final product of ATR is synthesis gas, mainly used in methanol synthesis and Fisher Tropsch.

When H₂ is the desired final product only SR and PO are used and in this case the produced synthesis gas further reacts following the water gas shift reaction (WGS) (iv).

CO + H₂O ←→ CO₂ + H₂ (iv)

Even if fired reformer has energy efficiency close to 50%, the SR process has overall energy efficiency higher than 90% coming from the high heat recovery possible from economy of scale.

The heat necessary to compensate the reaction endothermicity is produced burning methane and releasing about 3% of the World's emitted CO₂. Reformer tubes are immersed inside the fired reformer, in contact with the burners. Inside the reformer tubes a nickel based catalyst supported on ceramic materials is used. To limit temperature gradients within the reformer tubes, due to temperatures higher than 900 °C, low catalyst thermal conductivity and strongly endothermic SR reaction, the diameter varies from 100 mm to 150 mm. The optimized diameter of the reformer tubes maintains strong temperature gradients that result in catalyst effectiveness factor typically lower than 10% requiring hundreds of reformer tubes with length from 10 m to 13 m filled with catalyst. The downstream WGS step involves the exothermic WGS reaction. The WGS process requires temperature from 150 °C to 400 °C depending on the catalyst.

Current technologies for producing hydrogen from liquid reagents and methane-containing gas as two step processes have low flexibility with respect to reagents composition and production capacities. The current processes are capital intensive and when economy of scale heat recovery is not possible they achieve energy efficiency lower than 60%. Together with the extra heat exchanger, boiler, reactor, piping, valves, flow meter, fitting and vessel are also required. Moreover, the complex and tailored design of the plant together with the start-up operations decrease the process flexibility.

There have been various attempts to solve the above mentioned problems. For instance, US 2013/0028815 A1 and EP 3 574 991 A1 disclose applications of electrified metal catalyst supports. However, insufficient surface area and poor support-active phase interaction result in inadequate catalyst stability. Moreover, the resulting macroscopic structures have considerable cross surfaces that decrease electric resistance thus requiring high electric current. For this reason no commercial gas flow heater, for temperatures higher than 600 °C, uses electrified metal macroscopic structures.

In addition to above, comprehensive information as regards synthesis gas production can also be found in the "Concepts in Syngas Manufacture" book written by Jens Rostrup-Nielsen and Lars J. Christiansen.

US 2019/0009262 A1 discloses a parallel passage fluid contactor structure for chemical reaction processes which has one or more segments, where each segment has a plurality of substantially parallel fluid flow passages oriented in an axial direction; cell walls between each adjacent fluid flow passages and each cell wall has at least two opposite cell wall surfaces. The structure also includes at least one active compound in the cell walls and multiple axially continuous conductive filaments either embedded within the cell walls or situated between the cell wall surfaces. The conductive filaments are at least one of thermally and electrically conductive, are oriented in axially, and are in direct contact with the active compound, and are operable to transfer thermal energy between the active material and the conductive filaments. Having conductive filaments embedded within cell walls or situated between cell wall surfaces as described in US 2019/0009262 A1 creates an additional unwanted resistance to the heat transfer. Further, embedding metallic filaments in ceramic material may lead to mechanical failures due to the mismatch between the thermal expansion coefficients of the filament and the surrounding ceramic material.

FR 2 831 154 A1 discloses an electrical heating method to assist exothermic oxidation and endothermic pyrolysis reactions at high temperatures in a continuous flow hydrocarbon reforming reactor and an electrical heater thereof. FR 2 831 154 A1 utilises a reactor which contains a ceramic solid body.

US 2007/0071662 A1 discloses a fuel cell fuel reformer including a gas reactor for producing reformed fuel and an electric heater for heating the gas reactor. An external container includes an inner vacuum chamber, which accommodates the gas reactor and the electric heater, and receiving portions. An electric wire extends through the external container to supply electric power to the electric heater in the inner vacuum chamber. Fluid tubes are received by the receiving portions and extend through the external container. US 2007/0071662 A1 also discloses a reformer reaction channel.

JP-H 07 265652 A discloses a reactor provided with one discharge electrode and one counter electrode and a high-voltage pulse generating power source connected to both. The discharge electrode is of wire type while the counter electrode consists of plural polygonal-sectioned prismatic cylinders forming honeycomb monoliths. The wire-type discharge electrode is set at the center of each prismatic cylinder of the counter electrode, and the cylinder is placed in a reactor so that each opening of the cylinder is directed in the flow direction of waste gas. Consequently, since the non-dense plasma part is not formed, contact efficiency is improved, and the device is scaled up by enumerating the number of cylinders.

US 2018/0098385 A1 discloses a heating element for heating gases to high temperatures includes at least one tube arranged for the flow of gas to be heated and an electrical heating wire in the tube, which transfers heat to the gas flowing past. A process heater and a corresponding heating element are provided to permit generation of gas temperatures up to 1000 °C or above and having a lifespan 10 times longer than conventional heating coils. The heating wire is formed as a heating rod extending along the tube axis, whose maximum clear distance to the inner wall of the tube does not exceed a value of 10 mm over at least 80% of the circumference and/or at least 80% of the overlapping length of the tube and heating rod.

WO 2017/036794 A1 discloses a reactor system for carrying out an endothermic catalytic chemical reaction in a given temperature range upon bringing a reactant into contact with a catalyst material. The reactor system comprises a reactor unit arranged to accommodate catalyst material comprising one or more ferromagnetic macroscopic supports susceptible for induction heating where the one or more ferromagnetic macroscopic supports are ferromagnetic at temperatures up to an upper limit of the given temperature range. The one or more ferromagnetic macroscopic supports are coated with an oxide, and the oxide is impregnated with catalytically active particles. The reactor system moreover comprises an induction coil arranged to be powered by a power source supplying alternating current and being positioned so as to generate an alternating magnetic field within the reactor unit upon energization by the power source, whereby the catalyst material is heated to a temperature within said temperature range by means of the alternating magnetic field, where the catalyst material is arranged to be heated by said alternating magnetic field by induction of a magnetic flux in the material. A catalyst material and a process for carrying out an endothermic catalytic chemical reaction is also disclosed.

US 2005/0016064 A1 discloses a pre-reformer comprises a non-electrically conducting gas tight duct and an electrically conducting wire arranged in the duct. The electrically conducting wire is electrically isolated from the duct. The duct has an inlet for receiving a hydrocarbon fuel at a first end and an outlet for supplying a pre-reformed hydrocarbon fuel at a second end. At least the inner surface of the duct is chemically inert with respect to the hydrocarbon fuel. An electrical power supply is electrically connected to the electrically conducting wire and a control means controls the supply of electrical current through the electrically conducting wire to maintain the electrically conducting wire at a temperature to provide selective thermal decomposition of higher hydrocarbons in the hydrocarbon fuel. The performer reduces coking in associated fuel cells and other parts of a fuel cell system.

### BRIEF SUMMARY OF THE INVENTION

In view of the above mentioned technical problems encountered in the prior art, one object of the present invention is to reduce investment costs, number of equipment, energy consumption, carbon dioxide emissions and dimensions of reactors used for producing synthesis gas, hydrogen or carbon dioxide.

Another object of the present invention is to provide a reactor, which is used for producing synthesis gas, hydrogen or carbon dioxide, with wider flexibility both with respect to product capacity and to the possibility of being fed with various reactive mixture streams, even containing relevant amount of carbon dioxide, sulphurated or nitrogenous compounds.

In order to achieve above mentioned objects or those disclosed or to be deducted from the detailed description, the present invention relates to a reactor shell suitable for producing synthesis gas and/or carbon dioxide from a fed reactive mixture stream comprising:
at least one reactive stream duct formed within said reactor shell and essentially having a reactive stream inlet where said reactive mixture stream is fed, a reactive stream outlet where the reactive mixture stream exits the reactor shell and a catalyst section provided between said reactive stream inlet and reactive stream outlet;
an insulation filling at least partly encompassing said reactive stream duct;
a structured ceramic catalyst accommodated in said catalyst section, the reactive mixture stream undergoing a catalytic reaction, in particular steam reforming (SR) and/or dry reforming (DR) and/or partial oxidation (PO) and/or reverse water gas shift (WGS) and/or volatile organic compounds (VOC) oxidation and combinations thereof, in said structured ceramic catalyst, said structured ceramic catalyst being in monolith or tubular form and having a plurality of hollow flow paths which are configured to allow the reactive mixture stream to pass therethrough by coming in physical contact with the inner walls of the hollow flow paths of the structured ceramic catalyst, the material of the structured ceramic catalyst selected from the group consisting of SiO₂, Al₂O₃, Y₂O₃, WO₃, ZrO_{2,}TiO₂, MgO, CaO, CeO₂, FeO₂, ZnO₂ and combinations thereof supporting a catalytically active material selected from transition metals of the d-block elements;
an electrical heating means, powered by at least two electrical feeds connected to an electrical power supply for heating said structured ceramic catalyst up to a predetermined reaction temperature, wherein the electrical heating means and the electrical power supply are configured to heat the structured ceramic catalyst up to a temperature between 300 °C and 1300 °C, and the reactor shell has a design pressure between 1 bar and 150 bar,
wherein said electrical heating means is a resistive heating element arranged inside at least some of said hollow flow paths in a manner that there still remains a flowing passage inside the hollow flow paths, and the electrical heating means comprises meandered sections so that it extends in a meandered manner through or along some or all of the hollow flow paths.

Said resistive heating element is preferably a resistive wire.

In a probable embodiment of the reactor shell, the hollow flow paths are longitudinal channels arranged in juxtaposed manner.

In another probable embodiment of the reactor shell, the reactive stream duct further comprises a preheating/mixing section, which is formed in the continuation of the reactive stream inlet for preheating/mixing of the reactive mixture stream, a reactive stream channel connecting said preheating/mixing section to the catalyst section and a cooling section, which is formed in the continuation of the catalyst section, for cooling the reactive stream exiting before it exits from the reactive stream outlet.

The present invention also relates to a method for producing synthesis gas and/or carbon dioxide from a fed reactive mixture stream in a reactor shell comprising at least one reactive stream duct essentially having a reactive stream inlet, a reactive stream outlet and a catalyst section provided between said reactive stream inlet and reactive stream outlet, an insulation filling at least partly encompassing said reactive stream duct, a structured ceramic catalyst accommodated in said catalyst section, the reactive mixture stream undergoing a catalytic reaction, in particular steam reforming (SR) and/or dry reforming (DR) and/or partial oxidation (PO) and/or reverse water gas shift (WGS) and/or volatile organic compounds (VOC) oxidation and combinations thereof, in said structured ceramic catalyst, said structured ceramic catalyst being in monolith or tubular form and having a plurality of hollow flow paths which are configured to allow the reactive mixture stream to pass therethrough by coming in physical contact with the inner walls of the hollow flow paths of the structured ceramic catalyst, the material of the structured ceramic catalyst being selected from the group consisting of SiO₂, Al₂O₃, Y₂O₃, WO₃, ZrO_{2,}TiO₂, MgO, CaO, CeO₂, FeO₂, ZnO₂ and combinations thereof supporting a catalytically active material selected from transition metals of the d-block elements, an electrical heating means, powered by at least two electrical feeds connected to an electrical power supply, for heating said structured ceramic catalyst up to a predetermined reaction temperature, said method comprising the steps of:
arranging said electrical heating means, being a resistive heating element, inside at least some of said hollow flow paths in a manner that a flowing passage inside the hollow flow paths still remains, wherein the electrical heating means are meandered through or along some or all of the hollow flow paths,
energizing the electrical heating means via an electric power supply so that the structured ceramic catalyst is heated up to a temperature between 300 °C and 1300 °C,
feeding the reactive mixture stream with a pressure between 1 bar and 35 bar to the reactor shell through said reactive stream inlet,
allowing the reactive mixture stream to pass through said hollow flow paths in a manner that the reactive mixture stream contacts the electrical heating means,
allowing the reactive mixture stream to exit from said reactive stream outlet.

In a probable application of the method, the reactive stream fed through the reactive stream inlet is preheated up to a temperature from 500 °C to 600 °C at a pressure ranging from 1 bar to 150 bar and gets mixed in a preheating/mixing section of the reactive stream duct prior to reaching the structured ceramic catalyst.

In another probable application of the method, the reactive stream exiting from the structured ceramic catalyst is cooled down to a temperature from 150 °C to 800 °C in a cooling section of the reactive stream duct prior to exiting from the reactive mixture outlet.

In another probable application of the method, the reactive mixture stream is preheated with the heat of the cooling section via heat exchange means provided therebetween or via additional electrical heating means provided inside or in the vicinity of the preheating/mixing section.

### REFERENCE NUMERALS

10 Reactor shell
11 Insulation filling
20 Reactive stream duct
21 Reactive mixture inlet
22 Preheating/mixing section
23 Reactive stream channel
24 Catalyst section
25 Cooling section
26 Reactive mixture outlet
30 Structured ceramic catalyst
31 Hollow flow paths
311 Flow path inlet
312 Flow path outlet
313 Flowing passage
40 Electrical heating means
41 Meandered section
50 Electrical power supply
51 Electrical feeds
60 Heat exchange means

### BRIEF DESCRIPTION OF FIGURES

Figure 1 illustrates a vertical cross section of a reactor shell.
Figure 2 illustrates a horizontal cross section of a reactor shell.
Figure 3 illustrates a vertical cross section of a structured ceramic catalyst used in the reactor shell.
Figure 4 illustrates an alternative embodiment of a reactive stream duct formed in the reactor shell.

### DETAILED DESCRIPTION OF THE INVENTION

Preferred embodiments of the present invention will now be more particularly described by way of non-limiting examples with reference to the accompanying drawings. In this context, examples or embodiments referring to a structured ceramic catalyst being in the form of pellet or foam are not encompassed by the wording of the claims but are considered as useful for understanding the invention.

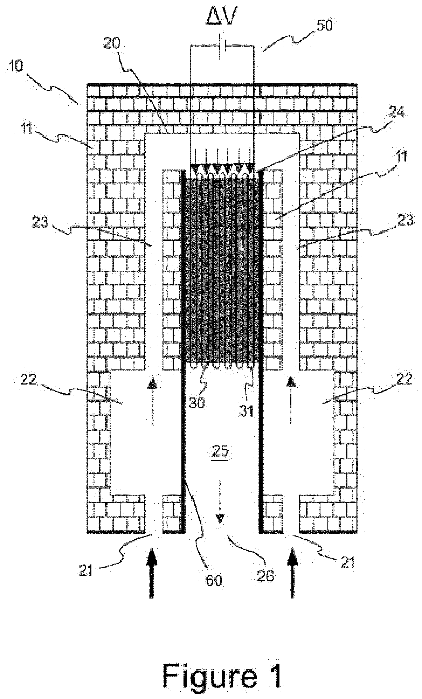

In Figure 1, a shell (10) of a reactor for the production of synthesis gas and/or hydrogen and/or carbon dioxide from a fed reaction stream, i.e. a reactive mixture stream, is shown. Said reactor shell (10) with an insulation filling (11) mainly comprises a reactive mixture duct (20), which is formed within the reactor shell so as to be encompassed by said insulation filling (11), and a structured ceramic catalyst (30) which is arranged within said reactive mixture duct (20) for realizing the steam reforming and/or dry reforming and/or partial oxidation and/or reverse water gas shift and/or VOC oxidation within the reactor shell. The structured ceramic catalyst is equipped with an electrical heating means (40), which is fed through at least two electrical feeds (51) that are running through the reactor shell (10) in an insulated manner from the reactor shell (10). Said electrical feeds (51) are connected to an electrical power supply (50) which is preferably placed outside the reactor shell (10) and configured to heat the structured ceramic catalyst (30) up to a desired temperature so that the intended reaction takes place. Thanks to this arrangement, the reactive mixture stream flows through the reactive mixture duct (20) and exits therefrom after being reacted by said structured ceramic catalyst (30). The structural and process details will hereunder be explained in detail.

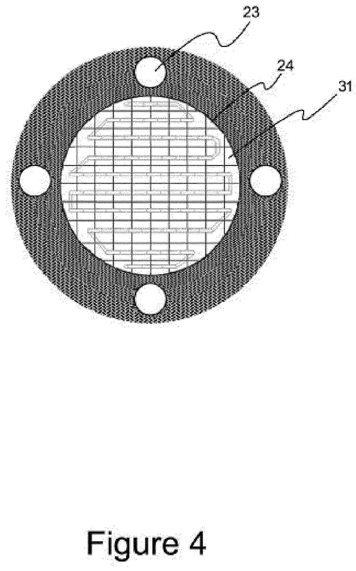

The reactive stream duct (20) comprises, in downstream order, a reactive stream inlet (21), preheating/mixing section (22), reactive stream channel (23), catalyst section (24), cooling section (25) and reactive stream outlet (26). Said structured ceramic catalyst (30) is arranged within said catalyst section (24). On the other hand, as shown in Figure 1, in a preferred embodiment of the invention there is provided a heat exchange means (60) between the preheating/mixing section (22) and cooling section (25) to adequately transfer the heat of the exiting reactive mixture stream in the cooling section (25) to preheating/mixing section (22). The structural details of the reactive stream such as cross section, size or advancing path may change depending on design requirements of specific applications. For instance, as shown in Figure 4, the reactive stream duct (20) may comprise four separate reactive stream inlets.

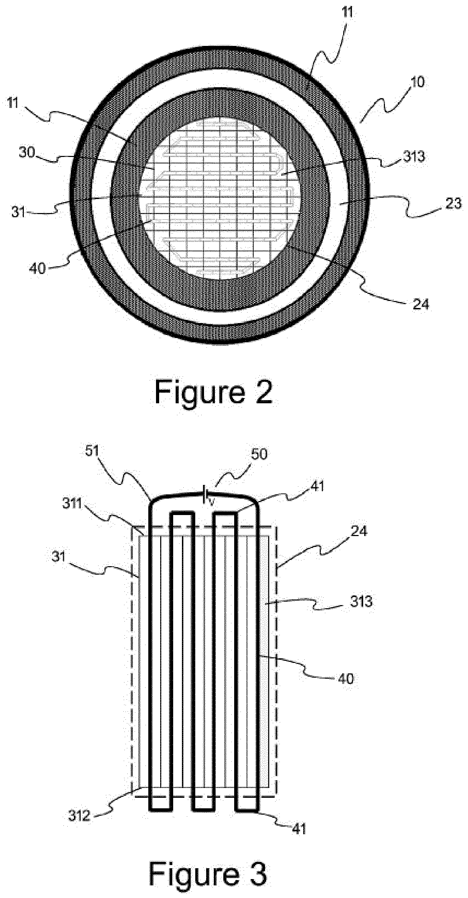

Referring to Figures 1 and 2, the structured ceramic catalyst (30) is a "catalyst bed" where the reaction takes place. It has plurality of hollow flow paths (31) which allow the reactive mixture stream to pass therethrough. The structured ceramic catalyst (30) can be in a form of pellet (= not encompassed by the wording of the claims but considered as useful for understanding the invention), foam (= not encompassed by the wording of the claims but considered as useful for understanding the invention), monolith or tubular with plurality of hollow flow paths formed within in a juxtaposed or not juxtaposed manner. Accordingly, form and deployment of the hollow flow paths (31) are defined by the structure of the structured ceramic catalyst (30). The material of the structured ceramic catalyst (30) is selected from the group consisting of SiO₂, Al₂O₃, Y₂O₃, WO₃, ZrO_{2,}TiO₂, MgO, CaO, CeO₂, FeO₂, ZnO₂ and combinations thereof supporting a catalytically active material as for example Pt, Ru, Rh, Ir, Pd or Ni. Additionally, in alternative embodiments, the reactor shell (10) may include more than one structured ceramic catalysts which are connected to each other in serial or parallel and/or have the same or different specifications.

Among the different structured ceramic catalyst (30) that can be used to operate under these reaction conditions, ceramic materials will be used as metallic supports, even if they usually present good thermal properties, they could short the electrical heating resistance causing poor and/or inhomogeneous heating, decreasing the lifetime of the heating elements. The catalytically active species are transition metals of the groups IIIB to IIB (d-block elements) and/or combination of two or more active species possibly including alkali metals. The structured ceramic catalyst (30) will undergo heterogeneous catalyst preparation as incipient wetness impregnation and/or impregnation and/or support wash coating and/or in-situ synthesis that are traditionally used in the synthesis of heterogeneous catalysts. The structured ceramic catalyst (30) is arranged in a way that the fed reactive mixture stream can have a contact time from 0.1 ms to 30000 ms. Related to this, contact time is obtained dividing volume of the structured ceramic catalyst by volumetric flow rate of the reactive stream.

As shown in Figures 2 and 3, the electrical heating means (40) of the invention is arranged within the hollow flow paths (31) so that the structured ceramic catalyst (30) is heated from inside. In detail, the electrical heating means (40) are meandered through some or all of the plurality of hollow flow paths (31). Thanks to this embodiment, the hollow flow paths (31) are heated up by the electrical heating means (40) so that the structured ceramic catalyst (30) is heated from inside. The physical proximity (or contact) of the electrical heating means (40) with the structured ceramic catalyst (30) and the reactive mixture stream enhance the heat transfer via irradiation, convection and conduction. The proximity will make possible to operate the structured ceramic catalyst (30) surface at temperature between 300 °C to 1300 °C. Related to this, the combination of the structured ceramic catalyst (30) and the electrical heating means (40) must be arranged in a way to minimize the pressure drop while maintaining high heat and mass transfer. For instance, it is preferred that electrical heating means (40) is sized to leave an adequate flowing passage (313) inside the hollow flow path (31) once it is installed so that the flow of the reactive mixture stream is minimally affected while maintaining proximity to the structured ceramic catalyst (30), i.e. to inner walls of the hollow flow paths (31). Accordingly, in a preferred embodiment, the electrical heating means (40) is a resistive wire with enough flexibility so that it can easily be meandered between the hollow flow paths (31).

On the other hand, the deployment of the electrical heating means (40) within the hollow flow paths (31) is imposed by the selected type of the structured ceramic catalyst (30) such as foam (= not encompassed by the wording of the claims but considered as useful for understanding the invention), pellet (= not encompassed by the wording of the claims but considered as useful for understanding the invention), monolithic or tubular types.

For instance, as shown in Figure 3, in monolithic type of structured ceramic catalyst, the hollow flow paths are in longitudinal channels extending one next to other in juxtaposed manner, defining a grid like cross section. Thanks to juxtaposed arrangement, the flow is confined inside the hollow flow paths (31) inside of which is heated and reacted. If the hollow flow paths are formed in not juxtaposed manner, bypass of flow may occur in bypass regions left between the neighbouring hollow structures. Since said bypass regions are outside of the hollow flow paths and thus not heated, temperature of the flow decreases in bypass regions, resulting in low efficiency of the reactor. Thus, if monolithic type of structured ceramic catalyst is used in the reactor shell (10), the electrical heating means (40) is placed longitudinally within the hollow flow paths (31), extending in parallel to the flow direction of the reactive mixture stream while the meandered sections (41) of the electrical heating means (20) remain outside the hollow flow paths (31). Thus, when installing the electrical heating means, preferably in resistive wire form, to the structured ceramic catalyst (30), the resistive wire is inserted from a flow path inlet (311) of a first hollow flow path and exited from a flow path outlet (312) thereof at the other end and then inserted to a flow path outlet of a second hollow flow path and exited from a flow path inlet thereof, as shown in Figures 2 and 3.

If, foam type, i.e. open cell form type, structured ceramic catalyst is selected (= not encompassed by the wording of the claims but considered as useful for understanding the invention) the electrical heating means (40) may extend omnidirectional similar to the hollow flow paths defined by the foamy structure. In detail, the electrical heating means (40) is passed through the open cells, defining the hollow flow paths (31), of the structured ceramic catalyst (30) from its inlet to the outlet opening, creating a heatable passage along the placement of the electrical heating means (40). In this case, the reactive mixture stream flows omnidirectional due to the omnidirectional open structure of the open cell foam of the structured ceramic catalyst (30). The meandering of the electrical heating means is done in a similar way to the previously described embodiment, namely, being meandered along the hollow flow paths in open cell structure along the structured ceramic catalyst, forming a heatable passages where the reactive mixture stream flows.

The electrical heating means (40) comprises a resistive heating element in a wire form. Thanks to the tiny structure of said wire form, flow of the reactive mixture stream is not affected and it is easy to meander. In alternative embodiments, however, resistive heating element in tubular or spring forms may also be used.

In the light of the above mentioned structural properties of the invention, how the reaction proses progress is explained below in detail.

Once a reactive mixture stream is fed through the reactive stream inlet (21), the nebulization/vaporization and/or atomization of one or more streams of liquid reagent consisting of one or more of the following reagents occur: naphtha's, alcohols, water, other products of refining and oil, an oxidizing stream, possibly a methane-containing stream, possibly a gaseous stream with VOC. The fed liquid and/or gaseous reagents (i.e. reactive mixture stream) are possibly nebulized and/or atomized and/or vaporized using a vapour and/or gaseous stream possibly assisted by ultrasounds and where oxidizing streams of vapour and/or air and/or oxygen and/or carbon dioxide are also fed. Said reactive mixture stream fed to the reactive mixture inlet (21) is possibly pre-heated at a temperature lower than the boiling point, that evaporating inside the reactor shell will be used to cool down that reaction products and will help the control of the temperature. Said reactive mixture stream fed to the reactive mixture inlet (21) has a temperature ranging from 25 °C to 300 °C, preferably at a temperature lower than 200 °C and at a pressure ranging from 1 bar to 150 bar, preferably lower than 50 bar.

The nebulization/vaporization and/or atomization, that the reactive mixture stream undergoes (e.g. by ultrasound) before being fed into the reactive stream inlet (21), must ensure an optimized phase change of the liquid stream and avoid gas phase reaction. The poor evaporation and mixing must be avoided as:
- They could cause the formation of carbonaceous deposit.
- They could create cold spot and/or hot spot that could damage the reactor shell including structured ceramic catalyst.
- They could create flammable pockets within the reactor shell with possible safety issues.
- They could decrease the yield of the reaction toward the desired products.
- They could require additional and extra consumption of energy in the structured ceramic catalyst (30).

In various embodiments of the reactor, the feed of the reactive mixture stream in liquid form can take place in a single or multiple points and/or position in the apparatus. The expansion and nebulization can be improved by optimized design of reactive stream duct (20) geometry and/or through use of high surface area material with high thermal properties (thermal conductivity higher than 10 W m⁻¹ °C⁻¹).

In the preheating/mixing section (22) which begins at the end of the reactive stream inlet (21) and ends at the inlet of the reactive stream channel (23), the preheating and mixing of the fed reactive mixture stream is realized. In this section, reactive mixture stream, which is in nebulized, vaporized or atomized form, coming from the reactive stream inlet (21) is heated at temperatures varying from 50 °C to 600 °C and at a pressure ranging from 1 bar to 150 bar with the formation of a possible biphasic liquid-gas reaction mixture, and gets mixed.

In a preferred embodiment, an additional electrical heating means is provided in the preheating/mixing section (22) for heating the reactive stream.

In another preferred embodiment, the heat in the cooling section (25) is transferred to the preheating/mixing section (22) via heat exchange means (60) provided between the preheating/mixing section (22) and the cooling section (25). For instance, additional heating is provided by the additional exothermic (giving out heat) reaction such as WGS at a temperature from 150 °C to 400 °C, happening at the reactive mixture outlet (26), of which the heat is transferred into the preheating/mixing section (22) through a heat exchange means (60), such as a thermally conductive wall, arranged between the preheating/mixing section (22) and reactive mixture outlet (26).

In the preheating/mixing section (22), the reactive mixture stream is also homogenized by being mixed before going into the reactive stream channel (23). The purpose of the mixing function is to homogenize and to increase the temperature of the reactive mixture stream before entering the structured ceramic catalyst (30).

The preheating/mixing section (22) can have all different geometrical shapes including hemispherical and paraboloid. This zone could be either empty and/or filled with a solid to create a random or structured matrix that improves the mixing and the heat transfer as well as decreases the size. The transport phenomena could therefore rely on diffusion and/or conduction and/or convection according to the different design of this section. The design of the preheating/mixing section (22) must also avoid the presence of cold surfaces that could result on deposit of liquid reagent and/or poor cooling of the hot stream affecting the mechanical stability of the reactor and possibly the water-gas shift equilibrium and structured ceramic catalyst (30). Moreover, when the fed reactive mixture stream is within the flammable limits given the composition, temperature and pressure, the linear rate of the reactive mixture stream must be higher than the flame rate.

Subsequently, the preheated and mixed reactive mixture stream travels into the reactive stream channel (23), where minimized heat transfer occurs due to the insulation filling (11) covering the channel. Afterwards the reactive mixture stream passes to structured ceramic catalyst (30) which is arranged inside the catalyst section (24). In the structured ceramic catalyst, the reactive mixture stream undergoes a catalytic reaction such as SR and/or DR and/or PO and/or reverse WGS and/or VOC oxidation by coming in physical contact with the inner walls of the hollow flow paths (31) of the structured ceramic catalyst (30) supporting a catalytically active material. The hollow flow paths (31) are configured to prevent any stream bypass therebetween. In other words, the entire reactive mixture stream flowing through the structured ceramic catalyst (30) flows through the plurality of hollow flow paths (31). The catalytic reaction is realized when the structured ceramic catalyst (30) is heated from 300°C to 1300°C.

The required heating is provided by means of meandering electrical heating means (40) along some or all of the hollow flow paths (31) as explained above so that the structured ceramic catalyst 30 is heated from inside in an effective and homogenous manner. Thanks to this arrangement, the reactive mixture stream passing through the structured ceramic catalyst (30) will not only increase in temperature but will also react on structured ceramic catalyst (30) surface that is efficiently and homogeneously heated, preventing any temperature gradients that could result into carbonaceous deposits and/or thermal effect on the reaction and/or low catalyst effectiveness factor. Moreover, the homogeneous temperature that is reached in the structured ceramic catalyst (30) will increase reaction rate and catalyst effectiveness factor that, requiring reduced contact time and surface area, will result in compact and small reactor size.

The final reaction products will comprise a mixture of synthesis gas and/or hydrogen and/or CO₂ depending on the feed composition and on the reactions taking place. At the end of the SR and/or DR and/or PO and/or reverse WGS and/or full oxidation the reaction mixture will have a temperature from 300 °C to 1300 °C, preferably lower than 1000 °C.

The further advantages of equipping the structured ceramic catalyst (30) with electrical heating means (40) in the invented way, as explained above, are as follows:
- The possibility of limiting secondary reactions,
- the fast start up,
- the in-situ generation of heat that prevent heat transfer between environments and/or surfaces and/or flames at high temperature,
- the possibility of keeping low surface temperature of the resistive heating element using the endothermic reaction thus increasing resistive heating element lifetime,
- the possibility of easily increase the power duty according to the difference in the fed reactive mixture stream composition,
- the tight temperature control that will also facilitate and make up for possible variation in the apparatus capacity,
- the fact that the electrical resistance of the used heating elements requires standard operating voltage and current, nowadays used in gas flow heaters, avoiding complicated electrical delivery systems required in the case of electrified macroscopic structure of electrically conductive materials supporting ceramic coating as for example Fe, Cr and Al alloys,
- the possibility of homogeneously reaching high temperature within the structured ceramic catalyst (30) that will decrease the energy consumption as the avoided possibility of having cold and/or hot spots decreases the amount of oxidizing streams required to prevent any catalyst deactivation, for example by carbon deposition.
- the possibility of reaching temperature as high as 1400 °C, also in cycling conditions, that can be used for the catalyst activation and/or regeneration from possible carbonaceous deposit and/or poisoning species as sulphur and/or very high boiling point compounds.

The reactive mixture stream exiting the structured ceramic catalyst (30) arranged in the catalyst section (24) undergoes cooling at the cooling section (25), where the heat is exchanged with the preheating/mixing section (22) through the wall in between as explained above. This section is used for the exchange of heat between the reactive mixture stream leaving the catalyst section (24) and the reactive mixture stream present in the preheating/mixing section (22). This section will involve transfer between gases and/or a gas-liquid possibly involving phase transition maximizing the amount of heat that can be removed. The gas phase leaving the catalyst section (24) and entering the cooling section (25) flows in a zone that can have any geometrical shapes/configuration and possibly contains a highly conductive structured or/random packing material enhancing the turbulence at the heat transfer interface and/or the radial thermal conduction. The fast cooling step, relying on the high heat transfer coming from boiling liquids and strong temperature gradient, will minimize the cooling time therefore avoiding any undesired reaction as methanation and carbon monoxide disproportion.

In a preferred embodiment, gas quenching with water or steam might also be used for the further cooling of the reactive mixture stream exiting the catalyst section (24). The counterflow heat exchange occurring between the preheating/mixing section (22) and the cooling section (25) will improve the heat transfer. Energy transfer between product and reactive streams will take place in the same equipment thus intensifying the process and decreasing the capital investment costs avoiding extra heat exchanger, piping, valves, flow meter, fitting and vessel. In a preferred embodiment, after the decrease of the temperature after the cooling section (25), a system capable of promoting the exothermic WGS reaction at a temperature from 150 °C to 400 °C can also be used, providing extra heating assistance to the preheating/mixture section (22).

Finally, the reactive mixture stream arrives at the reactive stream outlet (26) before leaving the reactor shell (10).

By means of the above explained system and process with respect to SR and/or DR and/or PO and/or reverse WGS and/or full oxidation reaction, following results can be obtained:
- the full removal of CO₂ production coming from fuel gas combustion required for the high temperature endothermic reactions,
- the possibility of relying on renewable electrical energy and/or reagents converting the power to energy carrier through chemical reaction,
- high exergy efficiency,
- the possibility of avoiding temperature gradients that result in low catalyst effectiveness factor and big reactor volume,
- the possibility of converting a wide range of reactive mixtures and producing a wide range of synthesis gas compositions,
- the possibility of treating and reacting a wide range of reactive mixtures switching the main reaction among SR and/or DR and/or PO and/or reverse WGS and/or full oxidation,
- the possibility of industrializing DR reaction and therefore the usage of CO₂ for the final production of synthesis gas and/or hydrogen,
- the possibility of avoiding expensive high temperature fired furnaces and downstream tail gas treatments,
- the possibility to scale down synthesis gas and/or hydrogen production until flows that currently do not make the process economical,
- the possibility of decreasing the upstream heat exchangers size and/or number and/or avoiding any preheating, not only simplifying the process, but also decreasing the consumption of fuel gas and therefore the CO₂ production,
- the possibility of minimizing capital and operational costs intensifying the process, decreasing both volume and number of equipment,
- the possibility of adding air and/or oxygen in the reaction thus decreasing the demand of energy that the electrical heating elements must supply,
- the possibility of having CO₂ in a gas final stream in absence of inert (as nitrogen) and unreacted gases making possible low cost CO₂ separation for carbon sequestration,
- the possibility of removing CO₂ from the atmosphere relying on biomass based reagents followed by downstream CO₂ sequestration,
- the possibility of removing VOC impurities without using any additional fuels at temperatures lower than auto-ignition,
- the fast start up time and the flexibility of reacting different compositions and flows of reactive mixture streams allow to vary quickly the synthesis gas and/or hydrogen production minimizing accumulation and storage of reagents.
- the possibility of synthesis gas and/or hydrogen production using different type of starting reagents, decoupling the process economy from the reagent price assumed during plant design and making possible to switch to the cheapest reagent using the same method and apparatus.
- the possibility of using very high temperature (higher than 1000 °C) and high pressure with a consequent reduction of the volumes of the equipment further decreasing capital cost, heat losses, safety problems and human footprint.

## Claims

1. A reactor shell (10) suitable for producing synthesis gas and/or carbon dioxide from a fed reactive mixture stream comprising:
at least one reactive stream duct (20) formed within said reactor shell (10) and essentially having a reactive stream inlet (21) where said reactive mixture stream is fed, a reactive stream outlet (26) where the reactive mixture stream exits the reactor shell (10) and a catalyst section (24) provided between said reactive stream inlet (21) and reactive stream outlet (26);
an insulation filling (11) at least partly encompassing said reactive stream duct (20);
a structured ceramic catalyst (30) accommodated in said catalyst section (24), the reactive mixture stream undergoing a catalytic reaction, in particular steam reforming (SR) and/or dry reforming (DR) and/or partial oxidation (PO) and/or reverse water gas shift (WGS) and/or volatile organic compounds (VOC) oxidation and combinations thereof, in said structured ceramic catalyst (30), said structured ceramic catalyst (30) being in monolith or tubular form and having a plurality of hollow flow paths (31) which are configured to allow the reactive mixture stream to pass therethrough by coming in physical contact with the inner walls of the hollow flow paths (31) of the structured ceramic catalyst (30), the material of the structured ceramic catalyst (30) selected from the group consisting of SiO₂, Al₂O₃, Y₂O₃, WO₃, ZrO₂, TiO₂, MgO, CaO, CeO₂, FeO₂, ZnO₂ and combinations thereof supporting a catalytically active material selected from transition metals of the d-block elements;
an electrical heating means (40), powered by at least two electrical feeds (51) connected to an electrical power supply (50) for heating said structured ceramic catalyst (30) up to a predetermined reaction temperature wherein the electrical heating means (40) and electrical power supply (50) are configured to heat the structured ceramic catalyst (30) up to a temperature between 300 and 1300 °C, and the reactor shell (10) has a design pressure between 1 and 150 bar,
**wherein** said electrical heating means (40) is a resistive heating element arranged inside at least some of said hollow flow paths (31) in a manner that there still remains a flowing passage (313) inside the hollow flow paths (31), and the electrical heating means (40) comprises meandered sections (41) so that it extends in a meandered manner through or along some or all of the hollow flow paths (31).

2. The reactor shell (10) according to Claim 1, wherein said resistive heating element is a resistive wire.

3. The reactor shell (10) according to Claim 1, wherein the hollow flow paths (31) are longitudinal channels arranged in juxtaposed manner.

4. The reactor shell (10) according to Claim 1, wherein the reactive stream duct (20) further comprises a preheating/mixing section (22), which is formed in the continuation of the reactive stream inlet (21), for preheating/mixing of the reactive mixture stream, a reactive stream channel (23) connecting said preheating/mixing section (22) to the catalyst section (24), and a cooling section (25), which is formed in the continuation of the catalyst section (24), for cooling the reactive stream exiting before it exits from the reactive stream outlet (26).

5. A method for producing synthesis gas and/or carbon dioxide from a fed reactive mixture stream in a reactor shell (10) comprising at least one reactive stream duct (20) essentially having a reactive stream inlet (21), a reactive stream outlet (26) and a catalyst section (24) provided between said reactive stream inlet (21) and reactive stream outlet (26), an insulation filling (11) at least partly encompassing said reactive stream duct (20), a structured ceramic catalyst (30) accommodated in said catalyst section (24), the reactive mixture stream undergoing a catalytic reaction, in particular steam reforming (SR) and/or dry reforming (DR) and/or partial oxidation (PO) and/or reverse water gas shift (WGS) and/or volatile organic compounds (VOC) oxidation and combinations thereof, in said structured ceramic catalyst (30), said structured ceramic catalyst (30) being in monolith or tubular form and having a plurality of hollow flow paths (31) which are configured to allow the reactive mixture stream to pass therethrough by coming in physical contact with the inner walls of the hollow flow paths (31) of the structured ceramic catalyst (30), the material of the structured ceramic catalyst (30) being selected from the group consisting of SiO₂, Al₂O₃, Y₂O₃, WO₃, ZrO₂, TiO₂, MgO, CaO, CeO₂, FeO₂, ZnO₂ and combinations thereof supporting a catalytically active material selected from transition metals of the d-block elements, an electrical heating means (40), powered by at least two electrical feeds (51) connected to an electrical power supply (50), for heating said structured ceramic catalyst (30) up to a predetermined reaction temperature, said method comprising the steps of:
arranging said electrical heating means (40), being a resistive heating element, inside at least some of said hollow flow paths (31) in a manner that a flowing passage (313) inside the hollow flow paths (31) still remains, wherein the electrical heating means (40) are meandered through or along some or all of the hollow flow paths (31),
energizing the electrical heating means (40) via an electric power supply (50) so that the structured ceramic catalyst (30) is heated up to a temperature between 300 and 1300 °C,
feeding the reactive mixture stream with a pressure between 1 and 150 bar to the reactor shell (10) through said reactive stream inlet (21),
allowing the reactive mixture stream to pass through said hollow flow paths (31) in a manner that the reactive mixture stream contacts the electrical heating means (40),
allowing the reactive mixture stream to exit from said reactive stream outlet (26).

6. The method according to Claim 5, wherein the reactive stream fed through the reactive stream inlet (21) is preheated up to a temperatures from 500 °C to 600 °C at a pressure ranging from 1 bar to 150 bar and gets mixed in a preheating/mixing section (22) of the reactive stream duct (20) prior to reaching the structured ceramic catalyst (30).

7. The method according to Claim 5, wherein the reactive stream exiting from the structured ceramic catalyst (30) is cooled down to a temperature from 150 °C to 800 °C in a cooling section (25) of the reactive stream duct (20) prior to exiting from the reactive mixture outlet (26).

8. The method according to Claim 6 or 7, wherein the reactive mixture stream is preheated with the heat of the cooling section (25) via heat exchange means (60) provided therebetween or via additional electrical heating means provided inside or in the vicinity of the preheating/mixing section (22).

## Patentansprüche

1. Reaktorhülle (10), die zum Herstellen von Synthesegas und/oder Kohlendioxid aus einem zugeführten Reaktivmischungsstrom geeignet ist, aufweisend:
mindestens eine Reaktivstromleitung (20), die innerhalb der Reaktorhülle (10) gebildet ist und im Wesentlichen einen Reaktivstromeinlass (21), an dem der Reaktivmischungsstrom eingespeist wird, einen Reaktivstromauslass (26), an dem der Reaktivmischungsstrom die Reaktorhülle (10) verlässt, und einen zwischen dem Reaktivstromeinlass (21) und dem Reaktivstromauslass (26) vorgesehenen Katalysatorabschnitt (24) hat;
eine die Reaktivstromleitung (20) zumindest teilweise umfassende Isolierfüllung (11);
einen strukturierten keramischen Katalysator (30), der im Katalysatorabschnitt (24) untergebracht ist, wobei der Reaktivmischungsstrom im strukturierten keramischen Katalysator (30) eine katalytische Reaktion durchläuft, insbesondere Dampfreformierung (SR) und/oder Trockenreformierung (DR) und/oder partielle Oxidation (PO) und/oder reverse Wassergas-Shift (WGS) und/oder Oxidation flüchtiger organischer Verbindungen (VOC) und Kombinationen davon, wobei der strukturierte keramische Katalysator (30) in monolithischer oder röhrenförmiger Form ist und eine Vielzahl von hohlen Strömungswegen (31) hat, die so konfiguriert sind, dass es dem Reaktivmischungsstrom ermöglicht wird, durch sie zu fließen, indem er in physischen Kontakt mit den Innenwänden der hohlen Strömungswege (31) des strukturierten keramischen Katalysators (30) kommt, wobei das Material des strukturierten keramischen Katalysators (30) aus der Gruppe bestehend aus SiO₂, Al₂O₃, Y₂O₃, WO₃, ZrO₂, TiO₂, MgO, CaO, CeO₂, FeO₂, ZnO₂ und Kombinationen davon ausgewählt ist, die ein katalytisch aktives Material tragen, das aus Übergangsmetallen der d-Block-Elemente ausgewählt ist;
ein elektrisches Heizmittel (40), das durch mindestens zwei elektrische Zuführungen (51) betrieben ist, die mit einer elektrischen Stromversorgung (50) verbunden sind, um den strukturierten keramischen Katalysator (30) auf eine vorbestimmte Reaktionstemperatur zu erhitzen, wobei das elektrische Heizmittel (40) und die elektrische Stromversorgung (50) so konfiguriert sind, dass sie den strukturierten keramischen Katalysator (30) auf eine Temperatur zwischen 300 und 1300 °C erhitzen, und die Reaktorhülle (10) einen Auslegungsdruck zwischen 1 und 150 bar hat,
**wobei** das elektrische Heizmittel (40) ein Widerstandsheizelement ist, das innerhalb mindestens einiger der hohlen Strömungswege (31) in einer Weise angeordnet ist, dass innerhalb der hohlen Strömungswege (31) noch ein Strömungsdurchgang (313) verbleibt, und das elektrische Heizmittel (40) mäanderförmige Abschnitte (41) aufweist, so dass es sich in mäanderförmiger Weise durch oder entlang einige(r) oder alle(r) der hohlen Strömungswege (31) erstreckt.

2. Reaktorhülle (10) gemäß Anspruch 1, wobei das Widerstandsheizelement ein Widerstandsdraht ist.

3. Reaktorhülle (10) gemäß Anspruch 1, wobei die hohlen Strömungswege (31) nebeneinander angeordnete Längskanäle sind.

4. Reaktorhülle (10) gemäß Anspruch 1, wobei die Reaktivstromleitung (20) des Weiteren aufweist: einen Vorheiz-/Mischabschnitt (22), der in der Verlängerung des Reaktivstromeinlasses (21) gebildet ist, zum Vorheizen/Mischen des Reaktivmischungsstroms, einen Reaktivstromkanal (23), der den Vorheiz-/Mischabschnitt (22) mit dem Katalysatorabschnitt (24) verbindet, und einen Kühlabschnitt (25), der in der Verlängerung des Katalysatorabschnitts (24) gebildet ist, zum Kühlen des austretenden Reaktivstroms, bevor er aus dem Reaktivstromauslass (26) austritt.

5. Verfahren zum Erzeugen von Synthesegas und/oder Kohlendioxid aus einem zugeführten Reaktivmischungsstrom in einer Reaktorhülle (10), aufweisend: mindestens eine Reaktivstromleitung (20), die im Wesentlichen einen Reaktivstromeinlass (21), einen Reaktivstromauslass (26) und einen zwischen dem Reaktivstromeinlass (21) und dem Reaktivstromauslass (26) vorgesehenen Katalysatorabschnitt (24) hat, eine die Reaktivstromleitung (20) zumindest teilweise umfassende Isolierfüllung (11), einen strukturierten keramischen Katalysator (30), der im Katalysatorabschnitt (24) untergebracht ist, wobei der Reaktivmischungsstrom im strukturierten keramischen Katalysator (30) eine katalytische Reaktion durchläuft, insbesondere Dampfreformierung (SR) und/oder Trockenreformierung (DR) und/oder partielle Oxidation (PO) und/oder reverse Wassergas-Shift (WGS) und/oder Oxidation flüchtiger organischer Verbindungen (VOC) und Kombinationen davon, wobei der strukturierte keramische Katalysator (30) in monolithischer oder röhrenförmiger Form ist und eine Vielzahl von hohlen Strömungswegen (31) hat, die so konfiguriert sind, dass es dem Reaktivmischungsstrom ermöglicht wird, durch sie zu fließen, indem er in physischen Kontakt mit den Innenwänden der hohlen Strömungswege (31) des strukturierten keramischen Katalysators (30) kommt, wobei das Material des strukturierten keramischen Katalysators (30) aus der Gruppe bestehend aus SiO₂, Al₂O₃, Y₂O₃, WO₃, ZrO₂, TiO₂, MgO, CaO, CeO₂, FeO₂, ZnO₂ und Kombinationen davon ausgewählt wird, die ein katalytisch aktives Material tragen, das aus Übergangsmetallen der d-Block-Elemente ausgewählt wird, ein elektrisches Heizmittel (40), das durch mindestens zwei elektrische Zuführungen (51) betrieben wird, die mit einer elektrischen Stromversorgung (50) verbunden sind, um den strukturierten keramischen Katalysator (30) auf eine vorbestimmte Reaktionstemperatur zu erhitzen, wobei das Verfahren die Schritte aufweist:
Anordnen des elektrischen Heizmittels (40), das ein Widerstandsheizelement ist, innerhalb mindestens einiger der hohlen Strömungswege (31) in einer Weise, dass innerhalb der hohlen Strömungswege (31) noch ein Strömungsdurchgang (313) verbleibt, wobei das elektrische Heizmittel (40) durch oder entlang einige(r) oder alle(r) der hohlen Strömungswege (31) mäanderförmig angeordnet sind,
Versorgen des elektrischen Heizmittels (40) mit Energie über eine elektrische Stromversorgung (50), so dass der strukturierte keramische Katalysator (30) auf eine Temperatur zwischen 300 und 1300 °C erhitzt wird,
Einspeisen des Reaktivmischungsstroms mit einem Druck zwischen 1 und 150 bar in die Reaktorhülle (10) durch den Reaktivstromeinlass (21),
Ermöglichen, dass der Reaktivmischungsstrom durch die hohlen Strömungswege (31) in einer Weise fließt, dass der Reaktivmischungsstrom das elektrische Heizmittel (40) kontaktiert,
Ermöglichen, dass der Reaktivmischungsstrom aus dem Reaktivstromauslass (26) austritt.

6. Verfahren gemäß Anspruch 5, wobei der durch den Reaktivstromeinlass (21) zugeführte Reaktivstrom auf eine Temperatur von 500 °C bis 600 °C bei einem Druck im Bereich von 1 bar bis 150 bar vorgeheizt und in einem Vorheiz-/Mischabschnitt (22) der Reaktivstromleitung (20) gemischt wird, bevor er den strukturierten keramischen Katalysator (30) erreicht.

7. Verfahren gemäß Anspruch 5, wobei der aus dem strukturierten keramischen Katalysator (30) austretende Reaktivstrom in einem Kühlabschnitt (25) der Reaktivstromleitung (20) auf eine Temperatur von 150 °C bis 800 °C abgekühlt wird, bevor er aus dem Reaktivmischungsauslass (26) austritt.

8. Verfahren gemäß Anspruch 6 oder 7, wobei der Reaktivmischungsstrom mit der Wärme des Kühlabschnitts (25) mittels dazwischen vorgesehener Wärmetauschmittel (60) oder mittels zusätzlicher elektrischer Heizmittel, die innerhalb oder in der Nähe des Vorheiz-/Mischabschnitts (22) vorgesehen sind, vorgeheizt wird.

## Revendications

1. Enveloppe de réacteur (10) convenant à la production de gaz de synthèse et/ou de dioxyde de carbone à partir d'un flux de mélange réactif alimenté, comprenant
au moins un conduit de flux réactif (20) formé à l'intérieur de ladite enveloppe de réacteur (10) et comportant essentiellement une entrée de flux réactif (21) où ledit flux de mélange réactif est alimenté, une sortie de flux réactif (26) où le flux de mélange réactif sort de l'enveloppe de réacteur (10) et une section de catalyseur (24) prévue entre ladite entrée de flux réactif (21) et la sortie de flux réactif (26) ;
un remplissage isolant (11) englobant au moins partiellement ledit conduit de flux réactif (20) ;
un catalyseur en céramique structuré (30) logé dans ladite section de catalyseur (24), le flux de mélange réactif subissant une réaction catalytique, en particulier le reformage à la vapeur (SR) et/ou le reformage à sec (DR) et/ou l'oxydation partielle (PO) et/ou la transformation inverse de l'eau en gaz (WGS) et/ou l'oxydation des composés organiques volatils (VOC) et des combinaisons de ceux-ci, dans ledit catalyseur en céramique structuré (30), ledit catalyseur en céramique structuré (30) se présente sous la forme d'un monolithe ou d'un tube et possède une pluralité de voies d'écoulement creuses (31) configurées pour permettre au flux de mélange réactif de le traverser en entrant en contact physique avec les parois internes des voies d'écoulement creuses (31) du catalyseur en céramique structuré (30), le matériau du catalyseur en céramique structuré (30) choisi dans le groupe constitué de SiO₂, Al₂O₃, Y₂O₃, WO₃, ZrO₂, TiO₂, MgO, CaO, CeO₂, FeO₂, ZnO₂ et des combinaisons de ceux-ci supportant un matériau catalytiquement actif choisi parmi les métaux de transition des éléments du bloc d ;
un moyen de chauffage électrique (40), alimenté par au moins deux alimentations électriques (51) connectées à une source d'énergie électrique (50) pour chauffer ledit catalyseur en céramique structuré (30) jusqu'à une température de réaction prédéterminée, le moyen de chauffage électrique (40) et la source d'énergie électrique (50) étant configurés pour chauffer le catalyseur en céramique structuré (30) jusqu'à une température comprise entre 300 et 1300 °C, et
l'enveloppe de réacteur (10) ayant une pression de conception comprise entre 1 et 150 bars,
**dans lequel** ledit moyen de chauffage électrique (40) est un élément chauffant résistant disposé à l'intérieur d'au moins certaines desdites voies d'écoulement creuses (31) de manière à ce qu'il reste un passage d'écoulement (313) à l'intérieur des voies d'écoulement creuses (31), et le moyen de chauffage électrique (40) comprend des sections sinueuses (41) de sorte qu'il s'étend de manière sinueuse à travers ou le long de certaines ou de toutes les voies d'écoulement creuses (31).

2. Enveloppe de réacteur (10) selon la Revendication 1, dans laquelle l'élément chauffant résistant est un fil résistant.

3. Enveloppe de réacteur (10) selon la Revendication 1, dans laquelle les voies d'écoulement creuses (31) sont des canaux longitudinaux disposés de manière juxtaposée.

4. Enveloppe de réacteur (10) selon la Revendication 1, dans laquelle le conduit de flux réactif (20) comprend en outre une section de préchauffage/mélange (22), qui est formée dans le prolongement de l'entrée du flux réactif (21), pour le préchauffage/mélange du flux de mélange réactif, un canal de flux réactif (23) reliant ladite section de préchauffage/mélange (22) à la section de catalyseur (24), et une section de refroidissement (25), formée dans le prolongement de la section de catalyseur (24), pour refroidir le flux réactif avant qu'il ne sorte de la sortie de flux réactif (26).

5. Méthode de production de gaz de synthèse et/ou de dioxyde de carbone à partir d'un flux de mélange réactif alimenté dans une enveloppe de réacteur (10) comprenant au moins un conduit de flux réactif (20) comportant essentiellement une entrée de flux réactif (21), une sortie de flux réactif (26) et une section de catalyseur (24) située entre ladite entrée de flux réactif (21) et la sortie de flux réactif (26), un remplissage isolant (11) englobant au moins partiellement ledit conduit de flux réactif (20), un catalyseur en céramique structuré (30) logé dans ladite section de catalyseur (24), le flux de mélange réactif subissant une réaction catalytique, en particulier le reformage à la vapeur (SR) et/ou le reformage à sec (DR) et/ou l'oxydation partielle (PO) et/ou la transformation inverse de l'eau en gaz (WGS) et/ou l'oxydation des composés organiques volatils (VOC) et des combinaisons de ceux-ci, dans ledit catalyseur en céramique structuré (30), ledit catalyseur en céramique structuré (30) étant sous forme monolithique ou tubulaire et ayant une pluralité de voies d'écoulement creuses (31) qui sont configurées pour permettre au flux de mélange réactif de le traverser en entrant en contact physique avec les parois intérieures des voies d'écoulement creuses (31) du catalyseur en céramique structuré (30), le matériau du catalyseur en céramique structuré (30) étant choisi dans le groupe constitué de SiO₂, Al₂O₃, Y₂O₃, WO₃, ZrO₂, TiO₂, MgO, CaO, CeO₂, FeO₂, ZnO₂ et des combinaisons de ceux-ci supportant un matériau catalytiquement actif choisi parmi les métaux de transition des éléments du bloc d, un moyen de chauffage électrique (40), alimenté par au moins deux alimentations électriques (51) connectées à une source d'énergie électrique (50), pour chauffer ledit catalyseur en céramique structuré (30) jusqu'à une température de réaction prédéterminée, ladite méthode comprenant les étapes suivantes:
disposer lesdits moyens de chauffage électrique (40), qui sont des éléments chauffants résistants, à l'intérieur d'au moins certaines desdites voies d'écoulement creuses (31) de manière à conserver un passage d'écoulement (313) à l'intérieur des voies d'écoulement creuses (31), les moyens de chauffage électrique (40) étant orientés à travers ou le long de certaines ou de toutes les voies d'écoulement creuses (31),
alimenter le moyen de chauffage électrique (40) par l'intermédiaire d'une source d'énergie électrique (50) de manière à ce que le catalyseur en céramique structuré (30) soit chauffé à une température comprise entre 300 et 1300 °C,
alimenter l'enveloppe de réacteur (10) en flux de mélange réactif à une pression comprise entre 1 et 150 bars par l'entrée du flux réactif (21),
permettre au flux de mélange réactif de passer à travers ces voies d'écoulement creuses (31) de manière à ce que le flux de mélange réactif entre en contact avec les moyens de chauffage électrique (40),
permettre au flux de mélange réactif de sortir de ladite sortie de flux réactif (26).

6. Méthode selon la Revendication 5, dans laquelle le flux réactif alimenté par l'entrée du flux réactif (21) est préchauffé jusqu'à une température de 500 °C à 600 °C à une pression allant de 1 bar à 150 bars et est mélangé dans une section de préchauffage/mélange (22) du conduit du flux réactif (20) avant d'atteindre le catalyseur en céramique structuré (30).

7. Méthode selon la Revendication 5, dans laquelle le flux réactif sortant du catalyseur en céramique structuré (30) est refroidi à une température comprise entre 150 °C et 800 °C dans une section de refroidissement (25) du conduit du flux réactif (20) avant de sortir de la sortie du mélange réactif (26).

8. Méthode selon la Revendication 6 ou 7, dans laquelle le flux de mélange réactif est préchauffé avec la chaleur de la section de refroidissement (25) par des moyens d'échange de chaleur (60) prévus entre eux ou par des moyens de chauffage électrique supplémentaires prévus à l'intérieur ou à proximité de la section de préchauffage/mélange (22).
